# EUROPEAN PATENT APPLICATION

(11) **EP 3 248 473 A1**
(43) Date of publication of application: **29.11.2017**
(21) Application number: 17173153.2
(22) Date of filing: 26.05.2017
(51) Int. Cl.: A23L 27/10, B65D 85/808, A23L 23/10

(54) **FILTER CONTAINING DRIED VEGETABLES FOR THE PREPARATION OF A VEGETABLE BROTH**

(30) Priority: 26.05.2016 IT UA20163834
(71) Applicant: Società Agricola Taflo s.s. di Visentin Lucia & C., 36026 Pojana Maggiore (VI) (IT)
(72) Inventor: VISENTIN, Lucia, 36026 Pojana Maggiore (Vicenza) (IT); NEGRETTO, Pierguido, 36026 Pojana Maggiore (Vicenza) (IT)
(74) Representative: Zambardino, Umberto

(57) **Abstract**

The present invention regards a filter containing in its inside a predetermined quantity of edible vegetables in discrete and dried pieces wherein said edible vegetables are selected among combinations of vegetables suitable for the preparation of a vegetable broth, said filter being a wrapping at least partially permeable to liquids, in particular water, and forming barrier to the passage of solid matter.

The above filter can be used directly for the preparation of an "instant" vegetable broth by means of cooking-immersion of the same in hot or boiling water for a predetermined reduced amount of time. It is thus obtained a vegetable broth presenting organoleptic and nutritional properties wholly comparable to those of a similar vegetable broth obtained from a traditional domestic preparation starting with the same vegetables at fresh state.

## Description

### Field of application

The present invention refers to the food sector and in particular to the production of food preparations for household and/or collective catering use suitable for the preparation of vegetable broth.

In particular, the present invention refers to a filter containing in its inside a mixture of edible vegetables dried in pieces wherein said edible vegetables are selected from combinations of edible vegetables suitable for the preparation of a vegetable broth by means of cooking in water.

### Prior art

As it is known, the preparation of a vegetable broth, for example at the household level, requires several operations, including washing and peeling the fresh vegetables to be used such as celery, carrot, leek, tomato and possible other vegetables, roughly chopping these vegetables and gathering their pieces in a pot containing water. The water containing the mixture of said vegetables is then brought to the boil and left in this state for a predetermined amount of time sufficient to allow the vegetables to release the aromatic and/or nutritional soluble substances that impart aroma and flavor to the final vegetable broth. Then, after cooling and filtration of the solid fraction of boiled vegetables, a vegetable broth is obtained which can be used as a seasoning to flavor different dishes according to the most different recipes, in particular according to the dictates of Mediterranean cuisine.

Although the vegetable broth obtained in the aforementioned manner is wholly healthy and has the organoleptic and taste characteristics desired for the seasoning of dishes and/or to impart them flavor, its preparation is unfortunately long and laborious and this is not always compatible with often frenetic rhythms of life in modern societies.

In order to overcome this disadvantage, at the household level as well as in collective catering, the use of vegetable-based concentrates in various forms, such as liquid, pasty, granular or solid, such as cubes (so-called stock cubes), blocks or tablets is also known.

Such concentrates can indeed simply be added to the boiling water and dissolved in it in a few minutes, thus allowing the preparation of a broth in a substantially "instantaneous" manner.

However, the aforementioned concentrates have several disadvantages, including that of containing ingredients other than vegetables such as fats and flavoring enhancers such as salt and/or monosodium glutamate. These ingredients are used in varying proportions according to the recipe, frequently for the main purpose of imparting flavor to the final broth, since the vegetables used to prepare such concentrates often impart little flavor or, in any case, produce an inadequate amount of it either because they are of poor quality (for example, if non-fresh vegetables are used) or because the vegetables have substantially lost their organoleptic and nutritional characteristics due to the process itself of preparation of such vegetable-based concentrates.

Moreover, there is no doubt that such vegetable-based concentrates are unhealthy due to the presence of ingredients known to be harmful to health such as hydrogenated fats and/or monosodium glutamate. Another ingredient that is almost always used in the preparation of vegetable-based concentrates is the yeast extract, but it is unhealthy as well.

It is moreover to be noted that vegetable-based concentrates (such as stock cubes) are high in calories, due to their aforementioned ingredients, and are poor in nutritive substances.

Moreover, different processing steps of the ingredients used to obtain said vegetable-based concentrates are required, such steps requiring high energy consumption, which makes the preparation process of these products particularly expensive.

Finally, the packaging used to pack these vegetable-based concentrates can be very complex and usually has a high environmental impact in its disposal.

The main purpose of the present invention is therefore to provide a vegetable-based food preparation suitable for the preparation of a vegetable broth that overcomes the previously mentioned drawbacks with reference to the prior art.

Further purpose of the present invention is that of providing a vegetable-based food preparation for the above-mentioned use, in particular at the domestic level or in collective catering, which is of both comfortable and practical use and which can be obtained on industrial scale in an economic manner.

### Summary of the invention

Such purposes are achieved by a filter containing, in its inside, a predetermined amount of a mixture of edible vegetables in discrete and dried pieces, wherein said edible vegetables are selected from combinations of vegetables suitable for the preparation of a vegetable broth, said filter having a wrapping at least partially permeable to liquids, in particular water, and forming barrier to the passage of solid matter.

Preferably, the aforementioned mixture has a combination of edible vegetables in dried pieces which consists of the following vegetables: celery, celeriac, carrot, onion, leek and tomato.

Preferably, the aforementioned mixture of edible vegetables in dried pieces is obtained by mixing together discrete dried pieces of each vegetable obtained, for each vegetable, by means of a method which comprises the steps of:
- cutting a fresh vegetable obtaining discrete pieces of the fresh vegetable,
- drying said discrete pieces of fresh vegetable by placing said pieces in the form of at least one thin layer, preferably in the form of a plurality of separated thin layers, and contacting said at least one thin layer with a gas stream at a temperature comprised between 25°C and 35°C, preferably between 28°C and 32°C, for a time sufficient to achieve a predetermined moisture content, obtaining dried pieces of said vegetable.

The aforementioned purposes are also achieved by a method for producing a filter containing a mixture of edible vegetables in discrete dried pieces. This method comprises the steps of:
- providing a plurality of edible vegetables in discrete dried pieces;
- providing a filter with open wrapping in which at least one part of said wrapping is permeable to liquids and capable of retaining solid matter;
- arranging a predetermined amount (dose) of each vegetable on the inside of said wrapping of the filter, so as to form a mixture;
- closing said wrapping in order to package said mixture in said filter.

The present invention also refers to the use of a filter containing a mixture of vegetables dried in discrete pieces for the preparation of a vegetable broth. According to such use, the mixture of vegetables is immersed with its filter in hot or boiling water and cooked for a predetermined amount of time during which aromatic and/or nutritive substances contained in the vegetables are released in the cooking water, thus obtaining a vegetable broth.

The features and advantages of the present invention will be more evident in the detailed description and in the examples which follow, these latter being provided as indicative and non-limiting.

### Detailed description

In the present invention, with the term "mixture a vegetables" is meant a combination of edible vegetables suitable to be cooked in hot or boiling water (i.e. substantially at boiling temperature), thus forming a cooking liquid containing the soluble aromatic substances released by these vegetables. Such cooking liquid, commonly named vegetable broth, can be used as soup or as seasoning base for the realization of dishes or meals ready for consumption such as sauces, braised meats, roasts etc.

With the terms "aromatic substances" and "nutritive substances" are meant water-soluble substances normally contained in vegetables which can be released by cooking them in hot or boiling water and which impart to the cooking water (the so-called vegetable broth) an aroma and/or flavor and/or bring to the same a nutritional contribution (for example vitamins etc.).

In particular, in the present invention, the mixture of vegetables is constituted by a combination of the following vegetables: celery, celeriac, carrot, onion, leek and tomato.

It is however possible that the mixture of vegetables includes further vegetables in addition to the those mentioned above as a function of, for example, specific recipe needs. By way of example and not of limitation, such additional vegetables can be potato, garlic, parsley, zucchini, rosemary, fennel seeds, basil, chives, and green beans.

In the present invention, the original vegetables are fresh vegetables that can be processed just after the harvest or subsequently, after storage in conditioned environments until time of use, in order to obtain from them the edible parts of interest.

Such processing usually includes several operations, including a step of trimming (or peeling) to remove the peel or the zest, followed by a step of washing the trimmed vegetables and their eventual sanitization for example with ozonated water.

Subsequently, according to the present invention, the edible parts of the vegetables of interest are separated into discrete pieces by one or more cutting operations.

Preferably, the cutting is performed in order to obtain discrete pieces of vegetables of reduced dimensions. These discrete pieces each have a size, understood as maximum extension, preferably comprised between 1 mm and 10 mm, particularly between 3 mm and 7 mm.

According to the present invention, the vegetables in pieces are subjected to drying, preferably in a separate manner, since they have different drying times depending on their nature and composition. The drying is carried out in such way as to obtain pieces of dried vegetables for each type of vegetable used, preferably having an average moisture content of preferably between 5% and 10%, in particular between 7% and 9%.

After drying, the pieces of the single dried vegetables are mixed in predetermined quantities or doses and packed directly into a filter of a material suitable for contact with food and the resulting mixture in the filter will also have a moisture content of preferably between 5% and 10%, especially between 7% and 9%.

According to the present invention, the filter has a wrapping for the containment of a predetermined dose of said dried mixture of vegetables in pieces, said wrapping being at least partially permeable to liquids, in particular water, and able at the same time to hold the solid matter (vegetable material in pieces at its inside), when immersed and "cooked" in hot or boiling water.

This way, in the use according to the invention of said container, as will be better described below, the filter can be immersed in hot or boiling water with water that can penetrate inside the wrapping and solubilize the soluble aromatic and/or nutritive substances contained in the dried vegetables. At the end of the cooking, a liquid, the so called vegetable broth, containing soluble (aromatic and/or nutritive) substances released from the dried vegetable parts contained in the filter is thus obtained, while solid vegetable matter remains on the inside of the filter.

In the present invention, the filter can have any form suitable for containing a predetermined dose of a mixture of vegetables dried in pieces and can be made of any material, in particular a plastic, paper or tissue material suitable for contact with food.

According to an embodiment of the invention, the filter consists of a wrapping in the form of a bag of a material, particularly of a plastic material, which is porous (i.e. permeable to liquids) or configured as a net. Such bag can have a side or an end which is initially open (i.e. before packaging) so as to put a predetermined amount of the mixture of vegetables dried in pieces in its inside and which is closed after placing the aforementioned predetermined amount of mixture of dried vegetables in pieces in the wrapping.

According to a particularly preferred embodiment, the filter used in the present invention consists of a preferably transparent net bag in plastic material for food.

Such net bag can have any desired form for example because of esthetic reasons. As an example, it can have a squared form, a rectangular form or a preferably pyramidal form without however being bound to such forms being indeed other forms equally contemplated by this invention.

In the present invention it is also contemplated the use of other types of filters with also function as container for the mixture of vegetables dried in pieces.

For example, the filter according to the present invention can be in the form of a pod wrapping in flexible material permeable to liquids (in particular a paper or plastic permeable material) having an upper half-shell (or part) and a lower half-shell (or part) which are attached together along a perimeter end edge after having put (packaged) a predetermined amount of a mixture of vegetables in dried pieces between them.

Alternatively, the filter can also be made in the form of a container in rigid or semi-rigid material, for instance an adequate plastic material. For example, the filter can be made in form of a pod wrapping having a body with a containment slot and a lid permeable to liquids (for example porous or configured as a net) applied as closure of said body after having put in its inside a predetermined amount of a mixture of dried vegetables in pieces.

Plastic materials suitable for the making of the filters described above include in particular polyethylene (PE) for foods and biodegradable and heat-resistant plastics for foods as well, as in particular polylactic acid (PLA), the latter being a polymer of lactic acid obtained from maize according to known technologies and being biodegradable. It is however contemplated in the present invention the use of any polymer having characteristics of biodegradability, even partial, and of heat resistance and that is suitable for contact with foods. In particular, biodegradable plastics lend themselves to the creation of filters with a wrapping in form of biodegradable plastic material film.

The use of biodegradable plastics facilitates advantageously the disposal of the filter after its use according to the present invention.

The filters used in the present invention are preferably made of transparent plastic material. This advantageously allows the consumer to appreciate its content, for example at the time of purchase or consumption of the product according to the invention.

According to a preferred embodiment of the invention, the filter contains a mixture of vegetables dried in pieces wherein each dried vegetable is contained from 5% to 40% by weight on the total weight of the dose of dried mixture packed in the filter. Preferably, the dose of packed dried mixture presents the following composition: 20-30% carrot, 17-27% of celery, 2-12% celeriac, 7-17% onion, 7-17% leek, 10-30% tomato, wherein the percentages are by weight of the dry vegetable on the total weight of the packed mixture.

It is important to note that, according to a particularly preferred embodiment of the invention, the content of the above mentioned filter is composed solely by a mixture of vegetables dried in pieces without additional ingredients such as for example flavor enhancers (salt and/or glutamate), fats, additives and/or preservatives which are instead introduced in vegetable-based concentrates of known art and which make these known products unhealthy.

As far as it concerns the method of preparation of the dried vegetables mixture to insert in the filter according to the invention, it is to be said first of all that it can first of all include the preventive step of trimming (peeling) of the fresh vegetables in order to remove the peel or zest and to obtain the edible part of interest, followed by a step of washing and possibly (preferably) a sanitization of the trimmed vegetables in a rather conventional manner, for example with water or with ozonated water.

Subsequently, the vegetables are subjected to a step of subdivision into pieces by means of cutting, in order to obtain a plurality of discrete pieces (for example cubes, flakes or other forms) of reduced dimensions. As mentioned before, the dimensions of the single pieces, understood as maximum extension, are preferably comprised between 1 mm and 10 mm, in particular between 3 mm and 7 mm.

At the end of the step of cutting, the vegetables can be dried in order to remove the water remained from the washing. The drying can be performed in traditional manner, preferably by means of a centrifugal drying equipment or system.

The operations of trimming (peeling) and subdivision into pieces can be performed by means of in itself conventional cutting and peeling equipment.

At this point, the vegetables cut into discrete pieces are separately subjected to drying by virtue of their different drying times needed to obtain a predetermined moisture content in the dried vegetable and in the final product.

According to a preferred embodiment, the pieces of the individual fresh vegetables are placed to form one layer or preferably a plurality of separate layers so as to be ready for drying according to the invention.

This can be advantageously achieved by placing the pieces of the individual fresh vegetables in distinct layers on a surface of the drying equipment (such as an oven), for example on a flat surface of such equipment. Advantageously, such flat surfaces can be pierced, i.e. provided with a plurality of holes, for the passage of a gas, for example air, which will dry the pieces of the vegetables according to the invention.

The pieces of the individual fresh vegetables so disposed are thus invested with a flow of heated gas at a temperature comprised between 25°C and 35°C for a time sufficient to achieve a predetermined moisture content in the final dried vegetables.

Preferably, said temperature of the heated gas, for example air, is comprised between 28°C and 32°C.

Advantageously, the drying equipment can be provided with a dehumidifier to remove humidity from the gas after each step on the vegetables to be dried. In other words, after one passage on the mixture to be dried, the gas can be dehumidified in a dehumidifier associated to or within the drying equipment and then continue circulating in the drying equipment for the following steps on the vegetables to be dried until the desired amount of water has been removed from the vegetables. In the dehumidifier, the gas containing water in a vapor state removed from the vegetable mixture comes into contact with a heat exchanger run by a refrigerant fluid where the water is condensed and then eliminated.

Preferably, the drying time of the layer or of the layers of the pieces of each vegetable used is longer than 24 hours. More preferably, the drying time is comprised between 30 hours and 48 hours, as a function of the nature of the vegetable subjected to drying. This way, discrete dried pieces for each type of vegetable are obtained, having on average a predetermined residual moisture content preferably comprised between 5% and 10%, in particular 7-9%.

The gas used in the aforementioned drying method can be any gas or gas mixture inert in relation to the vegetables to be dried, i.e. the gas is not able to alter or deteriorate the organoleptic characteristics of the vegetables when it comes in contact with them in the condition of drying or dehydration according to the invention.

Preferably, the gas is composed by air or by a mixture comprising air, to the advantage of a reduction of the production costs due to a greater availability and a lower cost of the air. It was surprisingly found that by performing the drying of the vegetables in the above mentioned manner a product is obtained that essentially maintains the same organoleptic and nutritional characteristics as the respective vegetables at fresh state. Without being bound to any scientific theory, it is believed that the use of relatively low operating temperatures for the drying gas along with the dehumidification of such gas primarily contributes to the achievement of such result. It was indeed found that if drying is performed at operating temperatures even of some grades higher than the previously specified highest limit temperature (35°C), it can be obtained a significant alteration of the organoleptic characteristics (e.g. color) and/or degradation of the vegetables which compose the final mixture, that is those more sensitive to the action of heat, in particular leek, onion and celery. This is of course undesirable, as it would deprive the vegetables of the final mixture of precious aromatic and/or nutritive substances, which would be degraded or altered by the drying treatment with negative consequences on the taste and aroma of the vegetable broth obtained after the cooking in water of said vegetables.

Another important aspect for the achievement of the aforementioned result is represented by the arrangement in thin distinct layers of the vegetable pieces in the drying oven. This way, the contact surface with the heated gas is considerably augmented and as a consequence the speed of the removal of water from the fresh vegetable is increased; this constitutes a very important aspect since this way the benefic nutritive and/or taste and aroma conferring substances of the respective vegetables at fresh state are maintained substantially unaltered.

The combined effect of drying at relatively low operating temperatures accompanied by the dehumidification of the drying gas and the arrangement in layers of the vegetal material to be dried allows the removal of the water alone from the pieces of the vegetables subjected to drying and thus to obtain dried vegetables that essentially maintain each the same organoleptic and nutritional characteristics of their respective vegetables at fresh state.

After drying, the pieces of the vegetables separately dried are placed in predetermined doses within open filters/containers equipped with liquid-permeable wrapping in order to form a mixture of vegetables dried in pieces.

The dosing of a predetermined portion of said mixture in the wrapping of the respective filter can be performed in a conventional manner, for example by means of suitable dispensers known to those skilled in the art.

At this point, the casing is closed at the opening of the filter in a conventional manner, for example by applying adhesives, heat sealing, ultrasonic sealing or other techniques known to those skilled in the art.

The so obtained filter containing a predetermined quantity of mixture of vegetables dried in pieces can be in turn packed into a container, for example a box, both as single-serve pack and along with other similar filters (multi-dose pack). The resulting packaging can also advantageously provide relevant information on the product contained in the package, in particular the composition of the dried vegetables mixture, the manufacturer, and the use of the packaged product.

As far as the use of the filter is concerned, it has to be said that it can be directly used for the preparation of a vegetable broth by immersing it in a suitable cooking container containing hot or boiling water in a suitable volume (for example 500 ml) and by leaving it cooking in such a container, preferably covered, for example with a lid, for a predetermined amount of time (for example 10 minutes). During the cooking time, the cooking water permeates within the filter rehydrating the dried vegetable pieces contained in it and solubilising the water-soluble aromatic and/or nutritive substances contained in the vegetables. At the end of the cooking it is then obtained a vegetable broth that benefits from the taste and the aroma as well as from the nutritive content brought by the substances extracted from the vegetables from the cooking water while the solid vegetable matter remains within the filter.

At the end of the preparation of the broth, the filter can be extracted from the container used and, if desired, the consumer can also consume the cooked vegetables present in its inside by recovering them by means of simply opening the filter.

In the light of the foregoing, it is clear that the present invention brilliantly achieves the above-mentioned goals, achieving significant advantages over the prior art.

Indeed, the filter containing the vegetables dried in pieces according to the invention allows the preparation in a simple and substantially "instantaneous" way of a vegetable broth of optimal aroma, taste and nutritional content which are wholly comparable to those of a broth obtained by a traditional domestic preparation starting with the same vegetables at fresh state. This is achieved in particular thanks to the fact of using a drying method, as previously illustrated, that allows to remove the water from fresh cut vegetables without significantly altering their organoleptic and nutritional characteristics.

Therefore, advantageously, the vegetables dried in pieces of the mixture packed in the filter according to the invention retain the organoleptic and nutritional characteristics of fresh vegetables and are ready to release all the flavor, aroma and their beneficial properties in the vegetable broth obtained from them and in subsequent dishes prepared using this broth.

It should also be noted that the vegetable broth obtained from the use of the filter according to the invention is wholly healthy and natural by virtue of the fact that the filter according to the invention preferably contains only a mixture of vegetables in dried pieces and in particular does not contain all the non-vegetable additives normally used in vegetable-based concentrates such as preservatives, additives, flavor enhancers (in particular salt and/or glutamate), lactose, fats (in particular hydrogenated fats), lactose and gluten.

The filter containing the mixture of vegetables dried in pieces according to the invention thus results a healthy and natural alternative to the vegetable-based concentrates for the preparation of vegetable broth of the known art and allows to prepare a vegetable broth in reduced times, comparable to the times of preparation required starting from a vegetable-based concentrate of the known art, and thus without requiring the long preparation times of a traditional domestic preparation starting from the vegetables at fresh state.

Further advantages of the filter containing a mixture of vegetables in dried pieces according to the invention include the following:
- relatively long durability of the product, since the vegetables have a very low moisture content while maintaining their organoleptic and nutritional characteristics at fresh state;
- convenience and ease of use in the preparation of a vegetable broth both at home and in collective catering;
- low costs of production, since the realization of the filter according to the invention requires neither expensive starting materials nor complex equipment; on the contrary, it can be realized with simple production steps and does not require high energy consumption, since for such steps of production it can furthermore use equipment already in use, for example for similar applications.

The present invention will now be described by some embodiment examples provided as an indication and not as a limitation.

### Example 1

### Preparation of filters containing a mixture of dried vegetables according to the invention

A plurality of vegetables at fresh state, each in predetermined quantity, are separately subjected to trimming, washing and sanitization with ozonated water, cutting with a conventional cutter for vegetables and drying.

Specifically, the following vegetables are treated as indicated above: carrot, celeriac, onion, leek and tomato.

At the end of the cutting step, each vegetable is reduced into discrete pieces (for example cubes) of dimensions comprised between 3 mm and 7 mm.

Subsequently, the fresh vegetables cut into pieces are separately subjected to drying according to the present invention. To this end, the pieces of a given vegetable are transferred in a conventional drying equipment (drier) where they are arranged in distinct layers and flanked on a perforated surface of this equipment. The layers of vegetable pieces are then subjected to a stream of air having a predetermined temperature for a predetermined time, obtaining at the end of the treatment dried pieces of the above mentioned vegetable having a moisture content of 5-10%. The process as indicated above is repeated for each of the vegetables in pieces mentioned above.

The operating conditions of drying temperature and time have been the following:
- for the pieces of carrot: temperature: 32°C for a time of 48 hours;
- for the pieces of celery: temperature: 26°C for a time of 45 hours;
- for the pieces of celeriac: temperature: 30°C for a time of 48 hours;
- for the pieces of onion: temperature: 26°C for a time of 48 hours;
- for the pieces of leek: temperature: 25°C for a time of 40 hours;
- for the pieces of tomato: temperature: 30°C for a time of 48 hours.

At the end of the drying process, the dried pieces of each vegetable are transferred into respective dispensers and are each loaded in predetermined quantities in filters in plastic material (PE or film of biodegradable and heat-resistant plastic material both for foods), said filters being structured as a net of pyramidal shape and being open on a side to insert in their inside the dosed quantities of the above mentioned pieces of dried vegetables.

The dosing of the above mentioned vegetables inside the filters is performed in a rather conventional manner and in order to form inside each filter a mixture of vegetables in dried pieces having the composition as reported in the following table:

| Dried Vegetable | Quantity (g) |
|---|---|
| Carrot | 1 |
| Celery | 0.9 |
| Celeriac | 0.3 |
| Onion | 0.5 |
| Leek | 0.5 |
| Tomato | 0.8 |
| Total mixture | 4 |

At the end of the dosing, the filters containing each the predetermined dose of the mixture of dried vegetables are transferred to a packaging station where they are sealed by sealing their open side in a conventional manner, for example by ultrasonic sealing.

### Example 2

### Preparation of a vegetable broth

A filter containing a mixture of vegetables dried in pieces obtained as described in example 1 is utilized for the preparation of a vegetable broth.

For this preparation, a filter according to the invention is immersed in 500 ml of water placed in a cooking container (for example a pot). The water is thus brought to a boil, while simultaneously having care to cover the container with a lid and the filter is left to boil in boiling water for 10 minutes.

At the end of the cooking, the filter is removed leaving in the container a vegetable broth that has an optimal taste and an aroma wholly comparable to those of a vegetable broth obtained in traditional manner from the same composition of vegetables at fresh state.

The aforementioned vegetable broth has revealed itself wholly suitable for use as seasoning base and/or to add flavor in the preparation of ready-made meals or dishes such as for example rice dishes, braised meats, roasts etc. the same way as a similar vegetable broth obtained in a traditional manner from the same composition of fresh vegetables.

## Claims

1. A filter containing a predetermined amount of a mixture of edible vegetables in discrete and dried pieces in which said vegetables are selected from combinations of edible vegetables suitable for the preparation of a vegetable broth, said filter having a wrapping at least partially permeable to liquids, in particular water, and forming barrier to the passage of solid matter.

2. Filter according to claim 1, wherein said mixture has a combination of edible vegetables in dried pieces which consists of: 20-30% carrot, 17-27% of celery, 2-12% celeriac, 7-17% onion, 7-17% leek, 10-30% tomato, wherein the percentages are by weight of the dry vegetable on the total weight of the mixture.

3. Filter according to claim 1 or 2, wherein said mixture of edible vegetables in dried pieces is obtained by mixing together distinct dried pieces of each vegetable obtained, for each vegetable, by a method which comprises the steps of:
- cutting a fresh vegetable obtaining discrete pieces of fresh vegetable,
- drying said discrete pieces of fresh vegetable placing said pieces in the form of at least one thin layer, preferably in the form of a plurality of separated thin layers, and contacting said at least one thin layer with a gas stream at a temperature comprised between 25°C and 35°C, preferably between 28°C and 32°C, for a time sufficient to achieve a predetermined moisture content, obtaining dried pieces of said vegetable.

4. Filter according to any one of the preceding claims, wherein said discrete pieces of dried vegetables have a size, understood as maximum extension, comprised between 1 mm and 10 mm, preferably between 3 mm and 7 mm.

5. Filter according to any one of the preceding claims, wherein said discrete pieces of dried vegetables have a moisture content of between 5% and 10%, preferably between 7% and 9%.

6. Filter according to any one of the preceding claims, wherein said filter is made of a plastic material for foodstuffs, preferably polyethylene (PE) for foods or a film of a biodegradable and heat-resistant plastic material, preferably polylactic acid (PLA).

7. Filter according to claim 6, wherein said plastic material is transparent so as to confer transparency to the filter as a whole or in part of it.

8. Filter according to any one of the preceding claims, having the form of a bag preferably as a net of pyramidal shape, or a pod or a capsule.

9. Method for the production of a filter according to any one of the preceding claims, the method comprising the steps of:
- providing a plurality of edible vegetables in dried discrete pieces;
- providing a filter with open wrapping in which at least a part of said wrapping is permeable to liquids and capable of retaining solid matter;
- arranging a predetermined amount (dose) of each vegetable within said wrapping of the filter, so as to form a mixture;
- closing said wrapping so as to package said mixture in said filter.

10. Use of a filter according to any one of the preceding claims 1 to 9, for the preparation of a vegetable broth by cooking it in hot or boiling water for a predetermined time which is functional for obtaining said vegetable broth.
